# EUROPÄISCHE PATENTSCHRIFT

(11) **EP 3 318 368 B1**
(45) Veröffentlichungstag und Bekanntmachung des Hinweises auf die Patenterteilung: **23.08.2023**
(21) Anmeldenummer: 17001716.4
(22) Anmeldetag: 17.10.2017
(51) Int. Cl.: B25G 3/18

(54) **LÖSBARE STIELBEFESTIGUNGSKUPPLUNG FÜR ARBEITSGERÄTE**
RELEASABLE HANDLE FIXING COUPLING FOR WORKING UNITS
SYSTÈME DE COUPLAGE DE MANCHE AMOVIBLE POUR APPAREILS DE TRAVAIL

(30) Priorität: 21.10.2016 DE 102016012586
(43) Veröffentlichungstag der Anmeldung: 09.05.2018
(73) Patentinhaber: MTD Products Inc., Valley City, OH 44280 (US)
(72) Erfinder: HELD, Peter, 57583 Scheuerfeld (DE); SCHMIDT, Patrick Christian, 66606 St. Wendel (DE)
(74) Vertreter: Bird & Bird LLP

(56) Entgegenhaltungen:
- WO-A1-03/057419
- DE-A1- 3 246 887
- US-A1- 2010 192 738
- US-B1- 8 844 942

## Beschreibung

Im Bereich der Gartengeräte haben sich lösbare Stielbefestigungskupplungen durchgesetzt. Damit sind verschiedene Vorteile für den Anwender verbunden: Die 5 Geräte können mit den verschiedenen Stiellängen kombiniert werden. Es muss nicht für jedes Gerät ein Stiel gekauft werden. Insbesondere teure ausziehbare Stiele können für verschiedene Geräte wie Schere oder Säge genutzt werden. Das spart Geld und verringert den erforderlichen Lagerraum. Generell kann bei diesen lösbaren Stielbefestigungskupplungen zwischen den kraftschlüssigen und den formschlüssigen Grundtypen unterschieden werden.

Eine formschlüssige Verbindung zwischen einem Gartengerät und einem Gerätestiel nach dem Oberbegriff von Anspruch 1 ist beispielweise aus der DE3246887 A1 bekannt, die eine sehr schnelle, leichtgängige Rastverbindung zwischen einem an dem Gerät befestigten Geräteeinsteckzapfen und einem an einem Ende des Stiels befestigten Führungsstück beschreibt, das mit einer Führungsbohrung für den Einsteckzapfen versehen ist. In der Endlage wird der Einsteckzapfen ähnlich wie bei einem Sicherheitsgurt, mit einer Rastfeder formschlüssig verrastet. Die Rastfeder weist einen Vorsprung auf, der in eine Öffnung am freien Ende des Einsteckzapfens eingreifen und aus dieser durch einen Bedienknopf gelöst werden kann. Reine formschlüssige Verbindungen sind systembedingt mit Spiel an den Fügestellen verbunden. Eine Verringerung des Spiels am Eintrittsende der Führungsbohrung kann durch Einfügen eines elastischen Zwischenstückes zwischen Stiel und Gerät erreicht werden.

Demgegenüber wirken kraftschlüssige Verbindungen, beispielsweise durch Festlegen des Einsteckzapfens in einer Führungsbohrung des Führungsstückes durch eine Schraube, spielfrei. Diese Stielbefestigungskupplung ist jedoch in der Anwendung zeitaufwändig und umständlich.

Aus der WO 03/057419 A1 ist eine Stielbefestigungskupplung für ein Bodenreinigungsgerät bekannt, bei der ein Kuppelstück des Stiels in eine Stielhaltehülse mit einer dem Umriss des Kuppelstücks entsprechenden Ausnehmung einsetzbar ist. Die Stielhaltehülse weist mindestens eine durch 5 Schlitze gegenüber der Wand der Stielhaltehülse freigestellte und an ihrem freien Ende in radialer Richtung auslenkbare Rastzunge auf, an der eine nach innen abstehende Rastnase angeordnet ist, die nach dem Einstecken des Kuppelstückes in eine Rastvertiefung des Kuppelstücks einschnappbar ist. Die zumindest eine Rastzunge mit der Rastnase ist in der Rastvertiefung des Kuppelstücks durch einen Sperrschieber festlegbar, der in Axialrichtung auf der Stielhaltehülse zwischen einer Verriegelungsstellung und einer Freigabestellung verschiebbar angeordnet ist. Selbst bei der Verwendung von zwei diametral gegenüberliegenden Rastvertiefungen des Kuppelstückes beziehungsweise der Rastnasen der Rastzungen weist eine derartige Stielbefestigungskupplung in einer zu der Radialrichtung, in der die Rastzungen beziehungsweise deren Rastnasen auf das Kupplungsstück einwirken, ein Radialspiel in einer von dieser Rastrichtung abweichenden Richtung auf. Ein derartiges Spiel ist bei einer Stielbefestigungskupplung, bei der die Stielhaltehülse ohnehin über weitere Verbindungseinrichtungen gelenkig mit dem Arbeitsgerät, dem Bodenreinigungsgerät, verbunden ist, ohne Bedeutung, ist jedoch bei vielen Arbeitsgeräten äußerst unerwünscht. Weiterhin trennt sich bei einem versehentlichen Verschieben des Sperrschiebers das Kuppelstück von der Stielhaltehülse, da keine weiteren Rasteinrichtungen neben den Rastzungen vorgesehen sind.

Der Erfindung liegt die Aufgabe zu Grunde, die Vorteile der formschlüssigen Verbindung durch einen geeigneten Toleranzausgleich zu ergänzen, der die Bedienung nicht erschwert, aber dennoch das Spiel derart ausgleicht, dass es nicht mehr negativ in Erscheinung tritt. Ferner soll die Sicherheit der Stielbefestigungskupplung bei zufälliger Betätigung des Bedienknopfes erhöht werden.

Die Aufgabe wird erfindungsgemäß durch die Merkmale des Anspruchs 1 sowie des Anspruchs 16 gelöst.

Vorteilhafte Ausgestaltungen und Weiterbildungen der Erfindung ergeben sich aus den Unteransprüchen.

Bei der erfindungsgemäßen Stielbefestigungskupplung ist in dem Führungsstück mindestens eine weitere Blattfeder oder ein anderes elastisches Element integriert, die bzw. das spielausgleichend insbesondere auf das freie Ende des Geräteeinsteckzapfens wirkt.

Dies wird gemäß einer Ausführungsform durch einen Drucknocken erreicht, der unter Spannung in eine Ausnehmung in der Seitenfläche des vorzugsweise einen rechteckigen Querschnitt aufweisenden Geräteeinsteckzapfens eingreift und den Geräteeinsteckzapfen festklemmt. Auf diese Weise wird das fühlbare Spiel eliminiert.

Der Drucknocken kann auch eine weitere wichtige Funktion. Bei zufälliger unbeabsichtigter Betätigung des Bedienknopfes, wird der Geräteeinsteckzapfen immer noch von dem Drucknocken gehalten. Das Gerät wird sich also nicht, etwa bei einer Hackbewegung, in ungewollter und eventuell Umstehende gefährdenden Art und Weise von dem Stiel lösen.

Die gewünschte Höhe der Sicherheitshaltekraft kann über die Druckkraft des Nockens, also die Gestaltung der weiteren Blattfeder oder des elastischen Elementes und die Form der Ausnehmungen in dem Geräteeinsteckzapfen eingestellt werden.

Die Erfindung wird im Folgenden anhand von in der Zeichnung dargestellten Ausführungsbeispielen noch näher erläutert.

In der Zeichnung zeigen:
Figur 1 eine geschnittene Seitenansicht einer Ausführungsform der Stielbefestigungskupplung bei Betrachtung entlang der Schnittlinie A-A in Figur 2;
Figur 2 eine Draufsicht auf die Ausführungsform der Stielbefestigungskupplung nach Figur 1;
Figur 3 eine weitere Schnittansicht entlang der Linie A-A bei Betrachtung der Ausführungsform der Stielbefestigungskupplung von oben;
Figur 4 eine Schnittansicht einer Ausführungsform des Führungsschnittes entlang der Schnittlinie C-C nach Figur 5;
Figur 5 eine Außenansicht des Führungsstückes der Stielbefestigungskupplung;
Figur 6 eine gegenüber der Figur 5 um 90° gedrehte dargestellte Schnittansicht entlang der Linie A-A nach Figur 5;
Figur 7 eine Schnittansicht entlang der Linie B-B nach Figur 6;
Figur 8 eine perspektivische Darstellung des Führungsstückes in der Darstellung nach Figur 4;
Figur 9 eine perspektivische Ansicht einer Ausführungsform des Führungsstückes nach den Figuren 4 bis 7;
Figur 10 eine perspektivische Ansicht einer ersten Ausführungsform eines Gerätes mit einer ersten Ausführungsform des Geräteeinsteckzapfens;
Figur 11 eine perspektivische Ansicht einer zweiten Ausführungsform eines Gerätes mit einer zweiten Ausführungsform des Geräteeinsteckzapfens bei Betrachtung von oben;
Figur 12 eine perspektivische Ansicht der zweiten Ausführungsform des Geräteeinsteckzapfens nach Figur 11 bei Betrachtung von unten;

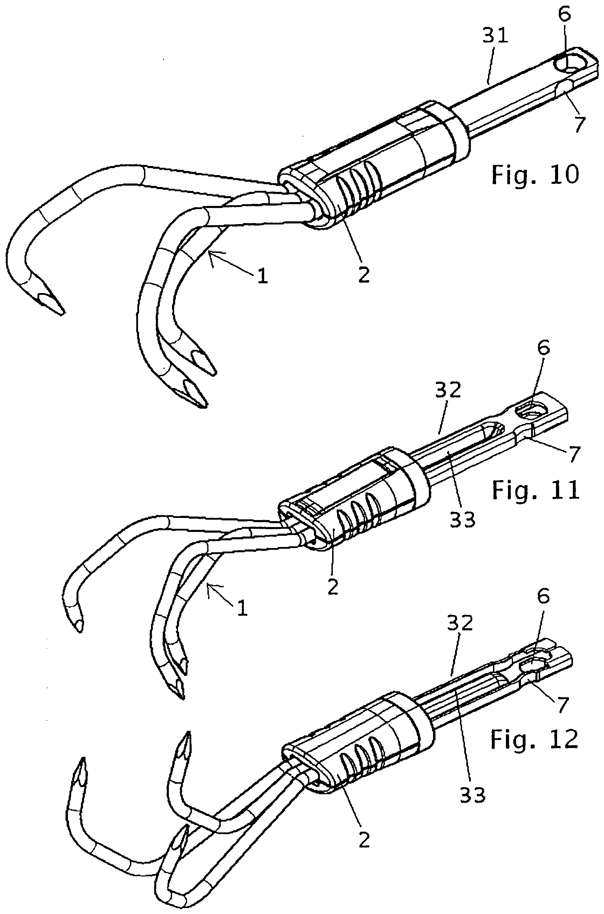

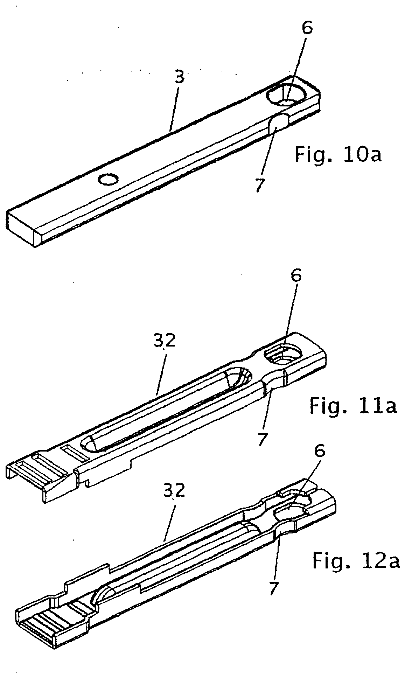

Figuren 10a bis 12a den Figuren 10 bis 12 entsprechende getrennte Darstellungen des Geräteeinsteckzapfens;

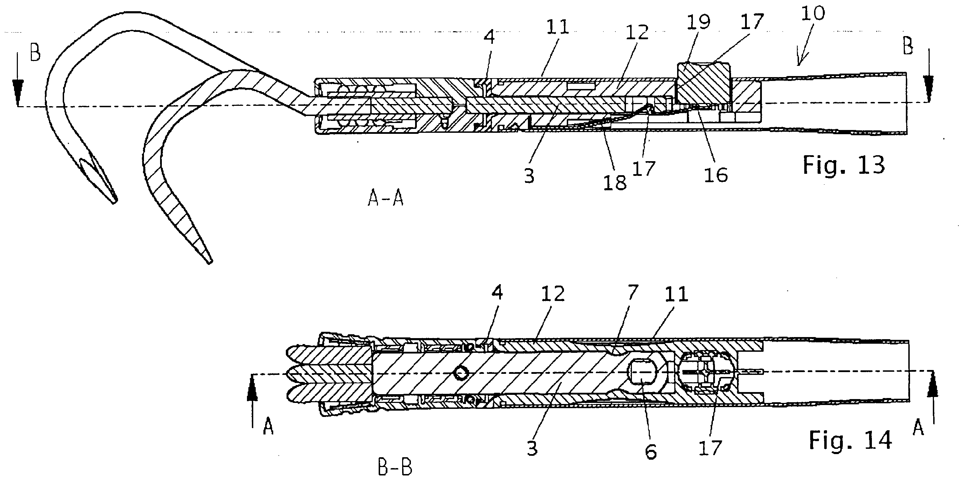

Figur 13 eine vertikale Schnittansicht durch das freie Ende des Stiels und das Führungsstück bei eingestecktem Geräteeinsteckzapfens;
Figur 14 eine Teilschnittansicht in einer gegenüber Figur 13 um 90° gedrehten Schnittansicht des Stiels und des Geräteeinsteckzapfens;

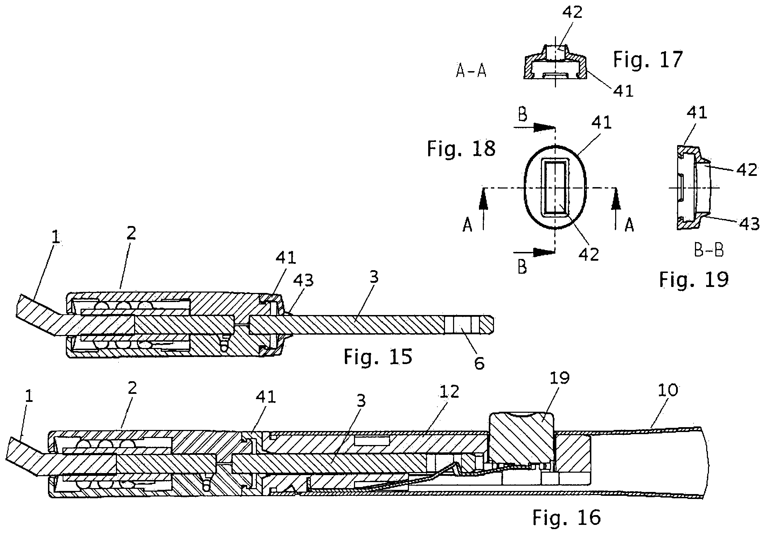

Figur 15 eine weitere Ausführungsform eines Griffstückes des Gerätes und des Einsteckzapfens;
Figur 16 eine vertikale Schnittansicht des Griffstückes und des Geräteeinsteckzapfens im eingesteckten Zustand in das Führungsstück;
Figur 17 eine Teildarstellung der Ausgleichsmanschette nach den Ausführungsformen nach den Figuren 15 und 17;
Figur 18 eine Draufsicht von oben auf die Ausgleichsmanschette;
Figur 19 einen Schnitt entlang der Linie B-B nach Figur 18.

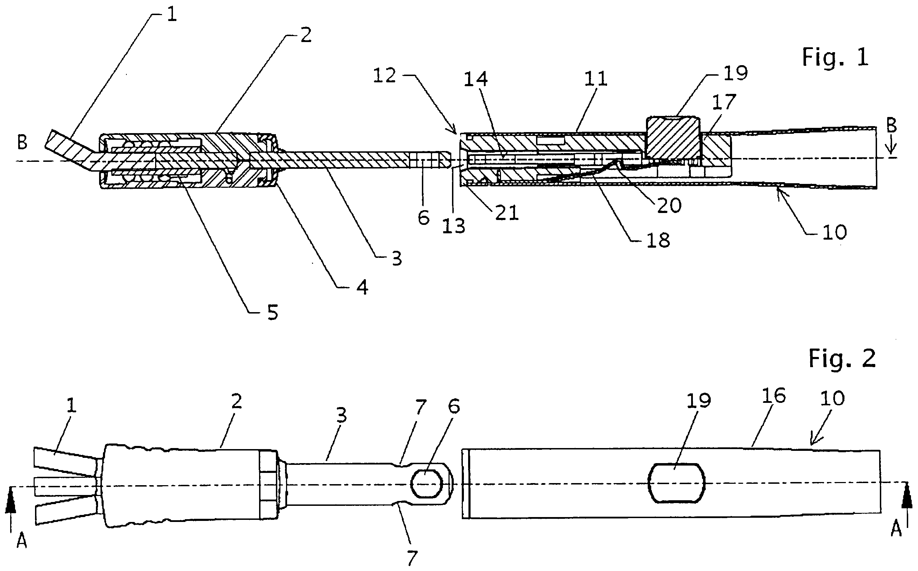

Die Figuren 1 und 2 zeigen eine erste Ausführungsform der Stielbefestigungskupplung zwischen einem nur weggebrochen dargestellten Arbeitsgerät 1 und einem Stiel, die die Grundgedanken der Erfindung schematisch zeigen.

Das Arbeitsgerät 1 ist über ein Griffstück 2 mit einem Geräteeinsteckzapfen 3 verbunden, der in einen Führungskanal 14 eines Führungsstückes 12 einsteckbar ist. Das Führungsstück 12 ist in das dem Arbeitsgerät benachbarte Ende 11 eines Stielrohres 10 eingesetzt und in diesem befestigt.

In dem Führungsstück 12 oder zwischen diesem und der Innenwand des Endes 11 des Stielrohres 10 ist eine in Richtung auf die Mitte des Endes 11 vorgespannte erste gebogenen Blattfeder 18 festgelegt, die ein in den Führungskanal 14 vorspringendes Rastelement 20 aufweist, das bei eingestecktem Geräteeinsteckzapfen 3 in eine an dessen freiem Ende angeordnete Verriegelungsöffnung 6 eingreift und damit den Geräteeinsteckzapfen 3 in dem Führungsstück 12 in Axialrichtung verriegelt. Eine Entriegelung ist durch Betätigung eines Bedienknopfes 19 möglich, der in einer Führungsbohrung 17 oberhalb des freien Endes der Blattfeder 18 niederdrückbar angeordnet ist.

Zwischen dem Griffstück 2 und dem äußeren Ende des Führungsstückes 12 ist vorzugsweise eine Ausgleichsmanschette 4 angeordnet, die an Hand der Figuren 17 bis 19 noch näher beschrieben wird und zum Ausgleich eines axialen Spiels zwischen Gerät und Stiel dient.

Hierbei verbleibt jedoch noch das Problem eines radialen Spiels, insbesondere am freien Ende des Geräteeinsteckzapfens.

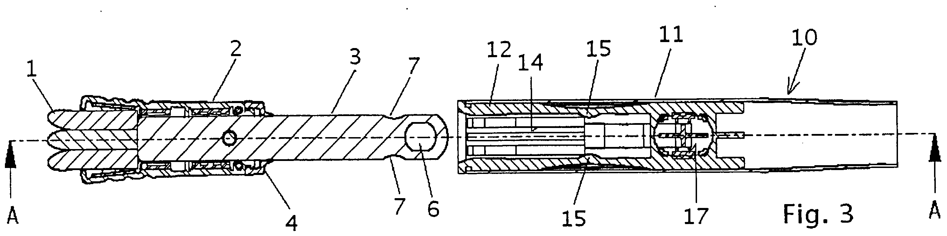

Dieses radiale Spiel wird gemäß einer vorteilhaften Ausführungsform durch mindestens einen Drucknocken 15 beseitigt, der unter elastischer Vorspannung in eine oder mehrere Ausnehmungen 7 in der Seitenfläche des vorzugsweise einen rechteckigen Querschnitt aufweisenden Geräteeinsteckzapfens 3 eingreift und diesen festklemmt, wie dies insbesondere aus den Figuren 3 und 14 zu erkennen ist. Auf diese Weise wird das fühlbare Spiel eliminiert.

Der rechteckige Querschnitt des Geräteeinsteckzapfens stellt lediglich ein Beispiel dar; es könnten auch andere Querschnittsformen bei entsprechender Ausgestaltung des Führungskanals verwendet werden, wobei die Ausnehmungen 7 für den oder die Drucknocken entsprechend anzupassen sind.

Der oder die Drucknocken 15 können auch eine weitere wichtige Funktion erfüllen.

Bei zufälliger unbeabsichtigter Betätigung des Bedienknopfes, wird der Geräteeinsteckzapfen immer noch von dem Drucknocken gehalten. Das Gerät wird sich also nicht, etwa bei einer Hackbewegung, in ungewollter und eventuell Umstehende gefährdenden Art und Weise von dem Stiel lösen.

Die gewünschte Höhe der Sicherheitshaltekraft kann über die Druckkraft des Nockens, also die Gestaltung der weiteren Blattfeder oder des elastischen Elementes und die Form der Ausnehmungen in dem Geräteeinsteckzapfen eingestellt werden.

In den Zeichnungen sind jeweils Drucknocken 15 gezeigt, die an den Seiten des Geräteeinsteckzapfens 3 angreifen. In gleicher Weise könnten beispielsweise bei der in Figur 13 gezeigten Darstellung zusätzliche Drucknocken oberhalb und unterhalb des Geräteeinsteckzapfens 3 angeordnet sein, um das Radialspiel des freien hinteren Endes des Geräteeinsteckzapfens 3 weiter zu verringern.

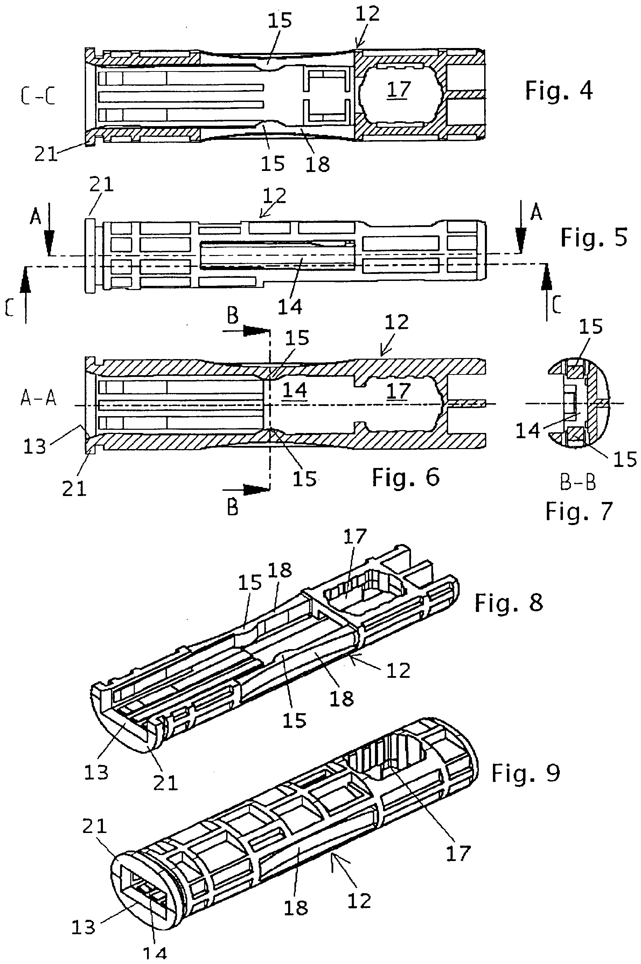

Eine Ausführungsform des Führungsstückes mit einstückig mit diesem Führungsstück ausgebildeten Drucknocken 15 und der zugehörigen, diese Drucknocken in Radialrichtung nach innen vorspannenden weiteren Flachfeder 18 ist aus den Figuren 4 bis 9 ersichtlich. Bei dieser Ausführungsform sind die weiteren Flachfedern 18 und die Drucknocken einstückig mit dem Führungsstück 12 in Form eines Kunststoff-Spritzteils ausgebildet, das dann in das freie Ende des Stielrohres 10 bis zur Begrenzung durch einen umlaufenden Flansch 21 einschiebbar ist, der am außenliegenden Ende des Führungsstückes 12 angeordnet ist. Wie dies insbesondere aus den Figuren 8 und 9 zu erkennen ist, kann dieses Führungsstück zur Vereinfachung der Herstellung auch aus zwei Hälften gebildet sein, die nach dem Einschieben in das Stielrohr zusammengehalten werden.

In gleicher Weise ist es möglich, die weiteren Flachfedern und die Drucknocken als getrenntes Bauteil auszuführen, die in einer entsprechenden umlaufenden Ausnehmung des Führungsstückes 12 dieses Führungsstück umgreifend angeordnet sind.

Die Figuren 10 bis 12 zeigen in Verbindung mit den Figuren 10a bis 12a zwei Ausführungsformen des Geräteeinsteckzapfens 3. Die in Figur 10 und 10a gezeigte massive Ausführungsform 31 wird für größere Geräte verwendet. Bei kleineren Handgeräten mit geringeren Betriebskräften kommt ein Blechformteil 32 zum Einsatz, das durch Einprägungen 33 versteift sein kann. Beide Ausführungsformen haben die oben genannten Ausnehmungen 6, 7 an gleicher Position und in gleicher Größe, so dass sie mit den gleichen Stielen verwendet werden können.

Die Figuren 17 bis 19 zeigen eine Ausführungsform einer elastischen Ausgleichsmanschette 41, die zwischen dem außen liegenden Ende des Führungsstückes 12 und dem Griffstück 2 angeordnet ist. Die Manschette 41 ist gewölbt und aufgrund ihrer Form in der Lage, trotz der langen Toleranzkette einen Ausgleich des axialen Spiels zwischen Gerät und Stiel zu gewährleisten, wie dies aus einem Vergleich der Figuren 15 und 16 zu erkennen ist.

Die Manschette weist an ihrem dem Griffstück zugewandten Ende Rasteinrichtungen zur Befestigung an dem Ende des Griffstückes 2 und an dem den Führungsstück zugewandten Ende einen konischen Ansatz 43 auf, der in die konische Öffnung 13 des Führungsstückes einsetzbar ist. Der Geräteeinsteckzapfen 3 erstreckt sich durch eine Öffnung 42 in dieser Manschette.

In Figur 15 ist diese Manschette 41 vor dem Einstecken in das Führungsstück 12 gezeigt, während in Figur 16 die Verformung der Manschette am Ende des Einsteckens in das Führungsstück 12 zu erkennen ist, die jedes Radial- und Axialspiel am freien äußeren Ende des Führungsstückes 12 beseitigt.

Im Zusammenwirken mit dem Drucknocken ergibt sich damit eine sehr sichere Halterung des Geräteeinsteckzapfens 3 in dem Führungsstück 12 beziehungsweise dem Ende des Stielrohres 10.

## Patentansprüche

1. Stielbefestigungskupplung, insbesondere für Haus- und Gartengeräte, mit einem in ein Stielrohr-Ende eingepressten Führungsstück (12), das einen langgestreckten Führungskanal (14) für einen in seiner Form und seinen Abmessungen an den Führungskanal (14) angepassten Geräteeinsteckzapfen (3) mit einem an dem Gerät befestigten ersten Ende und einem zweiten freien Ende aufweist, wobei das zweite Ende eine Verriegelungsöffnung (6) aufweist, und mit einem Riegelelement (20), das durch eine Rastfeder (18) in einer ersten Radialrichtung quer zur Stielachse vorgespannt und zum Einrasten in die Verriegelungsöffnung (6) des Geräteeinsteckzapfens (3) ausgebildet ist, wobei das Riegelelement durch einen Bedienknopf in Radialrichtung aus der Verriegelungsöffnung (6) heraus bewegbar ist, um den Geräteeinsteckzapfen (3) zum Herausziehen aus dem Führungskanal freizugeben,
**dadurch gekennzeichnet, dass** benachbart zu der Verriegelungsöffnung (6) in dem Führungskanal (14) des Führungsstückes (12) zumindest ein in Radialrichtung nach innen vorgespannter Drucknocken (15) angeordnet ist, der zur Ausübung einer Radialkraft unter einem Winkel zur ersten Radialrichtung auf einen in den Führungskanal (14) eingesteckten Geräteeinsteckzapfen (3) ausgebildet ist, der benachbart zu der Verriegelungsöffnung Ausnehmungen (7) aufweist, die sich von den jeweiligen Außenkanten des Geräteeinsteckzapfens in Richtung auf dessen Mittelachse erstrecken und in die der zumindest eine Drucknocken (15) eines in den Führungskanal eingesteckten Geräteeinsteckzapfens (3) eingreift.

2. Stielbefestigungskupplung nach Anspruch 1, **dadurch gekennzeichnet, dass** der mindestens eine Drucknocken zur Ausübung einer Radialkraft unter einem Winkel von mehr als 45 Grad zu der ersten Radialrichtung ausgebildet ist.

3. Stielbefestigungskupplung nach Anspruch 1 oder 2, **dadurch gekennzeichnet, dass** mindestens zwei Drucknocken (15) am Innenumfang des Führungskanals unter Winkelabständen voneinander angeordnet und in Richtung auf eine jeweilige Umfangsfläche eines in den Führungskanal (14) eingesteckten Geräteeinsteckzapfens (3) vorgespannt sind.

4. Stielbefestigungskupplung nach einem der Ansprüche 1 bis 3, **dadurch gekennzeichnet, dass** der mindestens eine Drucknocken (15) durch eine diesem zugeordnete Flachfeder (18) in Richtung auf eine Umfangsfläche eines in den Führungskanal (14) eingesteckten Geräteeinsteckzapfens (3) vorgespannt ist.

5. Stielbefestigungskupplung nach Anspruch 3 oder 4, **dadurch gekennzeichnet, dass** das Führungsstück (12), die Flachfedern (18) und die an diesen angeordneten Drucknocken (15) einstückig aus Kunststoff hergestellt sind.

6. Stielbefestigungskupplung nach einem oder mehreren der vorhergehenden Ansprüche, **dadurch gekennzeichnet, dass** die Flachfedern (18) und damit die Drucknocken (15) zum Ausüben einer Druckkraft ausgebildet sind, die ein Herausfallen des Geräteeinsteckzapfens (3) aus dem Führungskanal (14) verhindert und einem Spiel des freien Endes des Geräteeinsteckzapfens (3) in dem Führungskanal (14) entgegenwirkt.

7. Stielbefestigungskupplung nach einem oder mehreren der vorhergehenden Ansprüche, **dadurch gekennzeichnet, dass** das Führungsstück an einem aus dem Stielrohr (10) herausragenden Ende einen Radialflansch (21) aufweist, der die Einstecklage des Führungsstückes (12) in das Stielrohr (10) hinein begrenzt.

8. Stielbefestigungskupplung nach Anspruch 7, **dadurch gekennzeichnet, dass** zwischen dem Radialflansch (21) und einem das erste Ende des Geräteeinsteckzapfens (3) umgebenden Griffstück (2) eine elastische Ausgleichsmanschette (4) angeordnet ist, die ein Axialspiel und ein Radialspiel des Geräteeinsteckzapfens (3) gegenüber dem Führungskanal (14) beseitigt.

9. Stielbefestigungskupplung nach Anspruch 8, **dadurch gekennzeichnet,**
**dass** die Ausgleichsmanschette (4) eine gewölbte schalenförmige Form aufweist, deren Bodenfläche in nicht eingestecktem Zustand des Geräteeinsteckzapfens (3) in Abstand von dem von dem Gerät abgewandten Ende des Griffstückes (2) angeordnet ist und eine elastische Vorspannkraft in eingestecktem Zustand des Geräteeinsteckzapfens in Axialrichtung gegen den Flansch (21) ausübt.

10. Stielbefestigungskupplung nach Anspruch 8 oder 9, **dadurch gekennzeichnet, dass** die Ausgleichsmanschette (4) an ihrer von dem Ende des Griffstückes (2) abgewandten Seite einen rahmenförmigen konischen Ansatz aufweist, dessen Durchmesser in Richtung von dem Ende des Griffstückes (2) fort verringert ist, und dass dieser konische Ansatz in eine komplementäre konische Öffnung (13) am freien Ende des Führungsstückes (12) einsetzbar ist.

11. Stielbefestigungskupplung nach Anspruch 1, **dadurch gekennzeichnet, dass** das Führungsstück in Axialrichtung in zwei Hälften unterteilt ist, die beim Einpressen in das freie Ende des Stielrohres (10) zusammengedrückt werden.

12. Stielbefestigungskupplung nach Anspruch 1, **dadurch gekennzeichnet, dass** der Geräteeinsteckzapfen einen im Wesentlichen rechteckigen Querschnitt in Form eines flachen Stabes aufweist, in dessen Schmalseiten die weiteren Ausnehmungen (7) angeordnet sind.

13. Stielbefestigungskupplung nach Anspruch 12, **dadurch gekennzeichnet, dass** der Geräteeinsteckzapfen als ein massiver Stab ausgebildet ist.

14. Stielbefestigungskupplung nach Anspruch 1, **dadurch gekennzeichnet, dass** der Geräteeinsteckzapfen (31) aus zwei übereinander angeordneten Flachmaterial-Stäben gebildet ist.

15. Stielbefestigungskupplung nach Anspruch 1, **dadurch gekennzeichnet, dass** der Geräteeinsteckzapfen als Blechformteil (32) mit darin ausgebildeten Versteifungs-Einprägungen (33), der Verriegelungsöffnung (6) und den weiteren Ausnehmungen (7) ausgebildet ist.

16. Geräteeinsteckzapfen (3) für eine Stielbefestigungskupplung nach einem oder mehreren der vorhergehenden Ansprüche, der eine an einem freien Ende angeordnete Verriegelungsöffnung (6) aufweist, die zur Aufnahme eines Riegelelementes (20) ausgebildet ist, das durch eine Rastfeder (18) in einer ersten Radialrichtung quer zur Stielachse vorgespannt ist
**dadurch gekennzeichnet dass** der Geräteeinsteckzapfen (3) an seinen Außenkanten benachbart zu der Verriegelungsöffnung (6) mindestens eine Ausnehmung (7) aufweist, die sich von jeweiligen Außenkanten des Geräteeinsteckzapfens (3) in Richtung auf dessen Mittelachse (3) erstreckt und zur Aufnahme von mindestens einem elastisch vorgespannten Drucknocken (15) ausgebildet ist, der bei in einen Geräteeinsteckzapfen-Führungskanal (14) eingesteckten Geräteeinsteckzapfen (3) zum Eingriff in die mindestens eine Ausnehmung (7) ausgebildet ist.

## Claims

1. Handle fastening coupling, in particular for household and garden appliances, with a guide piece (12) which is pressed into one handle end and has an elongate guide channel (14) for an appliance plug-in pin (3) which is adapted in terms of its shape and its dimensions to the guide channel (14) and has a first end which is fastened to the appliance and a second free end, the second end having a locking opening (6), and with a bolt element (20) which is preloaded by way of a latching spring (18) in a first radial direction transversely with respect to the handle axis and is configured for latching into the locking opening (6) of the appliance plug-in pin (3), it being possible for the bolt element to be moved out of the locking opening (6) in the radial direction by way of an operating button, in order to release the appliance plug-in pin (3) for pulling out of the guide channel, **characterized in that** at least one pressure cam (15) which is preloaded inwards in the radial direction is arranged adjacently with respect to the locking opening (6) in the guide channel (14) of the guide piece (12), which pressure cam (15) is configured to exert a radial force at an angle with respect to the first radial direction on an appliance plug-in pin (3) which is plugged into the guide channel (14) and, adjacently with respect to the locking opening, has recesses (7) which extend from the respective outer edges of the appliance plug-in pin in the direction of its centre axis and into which the at least one pressure cam (15) of an appliance plug-in pin (3) which is plugged into the guide channel engages.

2. Handle fastening coupling according to Claim 1, **characterized in that** the at least one pressure cam is configured to exert a radial force at an angle of more than 45 degrees with respect to the first radial direction.

3. Handle fastening coupling according to Claim 1 or 2, **characterized in that** at least two pressure cams (15) are arranged on the inner circumference of the guide channel at angular intervals from one another, and are preloaded in the direction of a respective circumferential surface of an appliance plug-in pin (3) which is plugged into the guide channel (14).

4. Handle fastening coupling according to one of Claims 1 to 3, **characterized in that** the at least one pressure cam (15) is preloaded by way of a flat spring (18) assigned to it in the direction of a circumferential surface of an appliance plug-in pin (3) which is plugged into the guide channel (14).

5. Handle fastening coupling according to Claim 3 or 4, **characterized in that** the guide piece (12), the flat springs (18) and the pressure cams (15) which are arranged on them are produced in one piece from plastic.

6. Handle fastening coupling according to one or more of the preceding claims, **characterized in that** the flat springs (18) and therefore the pressure cams (15) are configured to exert a pressure force which prevents the appliance plug-in pin (3) from falling out of the guide channel (14) and counteracts a play of the free end of the appliance plug-in pin (3) in the guide channel (14).

7. Handle fastening coupling according to one or more of the preceding claims, **characterized in that**, at an end which protrudes out of the handle tube (10), the guide piece has a radial flange (21) which limits the plug-in position of the guide piece (12) into the handle tube (10) .

8. Handle fastening coupling according to Claim 7, **characterized in that** an elastic compensating collar (4) is arranged between the radial flange (21) and a handle piece (2) which surrounds the first end of the appliance plug-in pin (3), which compensating collar (4) eliminates an axial play and a radial play of the appliance plug-in pin (3) with respect to the guide channel (14).

9. Handle fastening coupling according to Claim 8, **characterized in that** the compensating collar (4) has an arched shell-shaped form, the bottom surface of which, in the state of the appliance plug-in pin (3) in which it is not plugged in, is arranged at a spacing from that end of the handle piece (2) which faces away from the appliance, and exerts an elastic preloading force in the axial direction against the flange (21) in the state of the appliance plug-in pin in which it is plugged in.

10. Handle fastening coupling according to Claim 8 or 9, **characterized in that**, on its side which faces away from the end of the handle piece (2), the compensating collar (4) has a frame-shaped conical attachment, the diameter of which is reduced in the direction away from the end of the handle piece (2), and **in that** this conical attachment can be inserted into a complementary conical opening (13) at the free end of the guide piece (12).

11. Handle fastening coupling according to Claim 1, **characterized in that** the guide piece is divided in the axial direction into two halves which are pressed together during pressing into the free end of the handle tube (10).

12. Handle fastening coupling according to Claim 1, **characterized in that** the appliance plug-in pin has a substantially rectangular cross section in the form of a flat rod, in the narrow sides of which the further recesses (7) are arranged.

13. Handle fastening coupling according to Claim 12, **characterized in that** the appliance plug-in pin is configured as a solid rod.

14. Handle fastening coupling according to Claim 1, **characterized in that** the appliance plug-in pin (31) is configured from two flat material rods which are arranged above one another.

15. Handle fastening coupling according to Claim 1, **characterized in that** the appliance plug-in pin is configured as a shaped sheet-metal part (32) with the reinforcing embossed portions (33) configured therein, the locking opening (6) and the further recesses (7).

16. Appliance plug-in pin (3) for a handle fastening coupling according to one or more of the preceding claims, which appliance plug-in pin (3) has a locking opening (6) which is arranged at one free end and is configured for receiving a bolt element (20) which is preloaded by way of a latching spring (18) in a first radial direction transversely with respect to the handle axis, **characterized in that**, on its outer edges adjacently with respect to the locking opening (6), the appliance plug-in pin (3) has at least one recess (7) which extends from respective outer edges of the appliance plug-in pin (3) in the direction of its centre axis (3) and is configured to receive at least one elastically preloaded pressure cam (15) which, in the case of an appliance plug-in pin (3) which is plugged into an appliance plug-in pin guide channel (14), is configured for engagement into the at least one recess (7) .

## Revendications

1. Accouplement de fixation de manche, notamment pour des outils ménagers et de jardinage, comprenant une pièce de guidage (12) enfoncée dans une extrémité de tube de manche, laquelle possède un canal de guidage (14) étendu en longueur pour un tenon d'insertion d'outil (3) dont la forme et les dimensions sont adaptées au canal de guidage (14) avec une première extrémité fixée à l'outil et une deuxième extrémité libre, la deuxième extrémité possédant une ouverture de verrouillage (6), et comprenant un élément formant verrou (20), qui est précontraint par un ressort d'encliquetage (18) dans une première direction radiale transversalement par rapport à l'axe du manche et configuré pour s'encliqueter dans l'ouverture de verrouillage (6) du tenon d'insertion d'outil (3), l'élément formant verrou pouvant être déplacé par un bouton de commande dans la direction radiale hors de l'ouverture de verrouillage (6), afin de libérer le tenon d'insertion d'outil (3) en vue de l'extraire hors du canal de guidage,
**caractérisé en ce qu'**au moins une came de pressage (15) précontrainte vers l'intérieur dans la direction radiale est disposée adjacente à l'ouverture de verrouillage (6) dans le canal de guidage (14) de la pièce de guidage (12), laquelle est configurée pour exercer une force radiale sous un angle donné par rapport à la première direction radiale sur un tenon d'insertion d'outil (3) inséré dans le canal de guidage (14), qui possède des cavités (7) voisines de l'ouverture de verrouillage, lesquelles s'étendent depuis les bords extérieurs respectifs du tenon d'insertion d'outil en direction de son axe central et dans lesquelles vient en prise au moins une came de pressage (15) d'un tenon d'insertion d'outil (3) inséré dans le canal de guidage.

2. Accouplement de fixation de manche selon la revendication 1, **caractérisé en ce que** l'au moins une came de pressage est configurée pour exercer une force radiale sous un angle supérieur à 45 degrés par rapport à la première direction radiale.

3. Accouplement de fixation de manche selon la revendication 1 ou 2, **caractérisé en ce qu'**au moins deux cames de pressage (15) sont disposées sous des écarts angulaires donnés les unes par rapport aux autres sur le pourtour intérieur du canal de guidage et sont respectivement précontraintes en direction d'une surface périphérique respective d'un tenon d'insertion d'outil (3) inséré dans le canal de guidage (14).

4. Accouplement de fixation de manche selon l'une des revendications 1 à 3, **caractérisé en ce que** l'au moins une came de pressage (15) est précontrainte par un ressort plat (18) qui lui est associé en direction d'une surface périphérique d'un tenon d'insertion d'outil (3) inséré dans le canal de guidage (14).

5. Accouplement de fixation de manche selon la revendication 3 ou 4, **caractérisé en ce que** la pièce de guidage (12), les ressorts plats (18) et les cames de pressage (15) disposées sur ceux-ci sont fabriqués d'un seul tenant en matière plastique.

6. Accouplement de fixation de manche selon une ou plusieurs des revendications précédentes, **caractérisé en ce que** les ressorts plats (18) et ainsi les cames de pressage (15) sont configurés pour exercer une force de pressage, laquelle empêche une chute du tenon d'insertion d'outil (3) hors du canal de guidage (14) et s'oppose à un jeu de l'extrémité libre du tenon d'insertion d'outil (3) dans le canal de guidage (14).

7. Accouplement de fixation de manche selon une ou plusieurs des revendications précédentes, **caractérisé en ce que** la pièce de guidage possède, à une extrémité qui fait saillie hors du tube du manche (10), une bride radiale (21) qui limite la position d'insertion de la pièce de guidage (12) à l'intérieur du tube de manche (10) .

8. Accouplement de fixation de manche selon la revendication 7, **caractérisé en ce qu'**une manchette de compensation (4) élastique est disposée entre la bride radiale (21) et une poignée (2) qui entoure la première extrémité du tenon d'insertion d'outil (3), laquelle élimine un jeu axial et un jeu radial du tenon d'insertion d'outil (3) par rapport au canal de guidage (14).

9. Accouplement de fixation de manche selon la revendication 8, **caractérisé en ce que** la manchette de compensation (4) présente une forme de coupe bombée, dont la surface du fond, dans l'état non inséré du tenon d'insertion d'outil (3), est disposée à l'écart de l'extrémité de la poignée (2) qui se trouve à l'opposé de l'outil et, dans l'état inséré du tenon d'insertion d'outil, exerce une force de précontrainte élastique dans la direction axiale contre la bride (21).

10. Accouplement de fixation de manche selon la revendication 8 ou 9, **caractérisé en ce que** la manchette de compensation (4) possède, au niveau de son côté situé à l'opposé de l'extrémité de la poignée (2), un appendice conique en forme de cadre dont le diamètre se réduit continuellement en s'éloignant de l'extrémité de la poignée (2), et **en ce que** cet appendice conique peut être inséré dans une ouverture conique (13) complémentaire à l'extrémité libre de la pièce de guidage (12).

11. Accouplement de fixation de manche selon la revendication 1, **caractérisé en ce que** la pièce de guidage est divisée en deux moitiés dans la direction axiale, lesquelles sont comprimées lors de l'enfoncement dans l'extrémité libre du tube de manche (10).

12. Accouplement de fixation de manche selon la revendication 1, **caractérisé en ce que** le tenon d'insertion d'outil possède une section transversale sensiblement parallélépipédique sous la forme d'une barre plate dans les côtés étroits de laquelle sont disposées les cavités (7) supplémentaires.

13. Accouplement de fixation de manche selon la revendication 12, **caractérisé en ce que** le tenon d'insertion d'outil est réalisé sous la forme d'une barre massive.

14. Accouplement de fixation de manche selon la revendication 1, **caractérisé en ce que** le tenon d'insertion d'outil (31) est formé de deux barres en matériau plat superposées.

15. Accouplement de fixation de manche selon la revendication 1, **caractérisé en ce que** le tenon d'insertion d'outil est réalisé sous la forme d'une pièce façonnée en tôle (32) dans laquelle sont formées des empreintes de raidissement (33), l'ouverture de verrouillage (6) et les cavités supplémentaires (7).

16. Tenon d'insertion d'outil (3) pour un accouplement de fixation de manche selon un ou plusieurs des revendications précédentes, lequel possède une ouverture de verrouillage (6) disposée au niveau d'une extrémité libre, laquelle est configurée pour accueillir un élément formant verrou (20) qui est précontraint par un ressort d'encliquetage (18) dans une première direction radiale transversalement par rapport à l'axe du manche **caractérisé en ce que** le tenon d'insertion d'outil (3) possède au moins une cavité (7) au niveau de ses bords extérieurs, voisine de l'ouverture de verrouillage (6), laquelle s'étend depuis les bords extérieurs respectifs du tenon d'insertion d'outil (3) en direction de son axe central (3) et est configurée pour accueillir au moins une came de pressage (15) précontrainte élastique, laquelle est configurée pour venir en prise dans l'au moins une cavité (7) lorsqu'un tenon d'insertion d'outil (3) est inséré dans le canal de guidage de tenon d'insertion d'outil (14).
